# EUROPÄISCHE PATENTSCHRIFT

(11) **EP 1 510 051 B1**
(45) Veröffentlichungstag und Bekanntmachung des Hinweises auf die Patenterteilung: **11.04.2007**
(21) Anmeldenummer: 03747442.6
(22) Anmeldetag: 30.04.2003
(51) Int. Cl.: H04L 12/58, H04Q 7/22

(54) **VERFAHREN ZUR BENACHRICHTIGUNG EINES EMPF NGERS BER EI NE AN DIESEN GESANDTE ELEKTRONISCHE NACHRICHT**
METHOD FOR INFORMING A RECIPIENT ABOUT AN E-MAIL THAT HAS BEEN SENT TO HIM/HER
PROCEDE POUR INFORMER UN DESTINATAIRE DE L'ENVOI D'UN MESSAGE ELECTRONIQUE LUI ETANT ADRESSE

(30) Priorität: 30.04.2002 DE 10219511
(43) Veröffentlichungstag der Anmeldung: 02.03.2005
(73) Patentinhaber: 1&1 Internet AG, 56410 Montabaur (DE)
(72) Erfinder: HENSING, Hanno, 69121 Heidelberg (DE)
(74) Vertreter: DTS München
(86) Internationale Anmeldenummer: PCT/EP2003/004543
(87) Internationale Veröffentlichungsnummer: WO 2003/094455

(56) Entgegenhaltungen:
- EP-A- 1 148 748
- WO-A-00/67436
- WO-A-02/13470
- WO-A-99/65256

## Beschreibung

Die vorliegende Erfindung betrifft ein Verfahren zur Benachrichtigung eines Empfängers über eine an diesen gesandte elektronische Nachricht, wobei der Empfänger mittels einer weiteren Nachricht über die an diesen gesandte Nachricht benachrichtigt wird.

Elektronische Nachrichten, meist als E-Mail bezeichnet, sind eine übliche Methode des Informationsaustausches zwischen Computern. Unter Computer ist dabei zunächst jedes stationäre oder mobile zur Ein- und Ausgabe von Textnachrichten befähigte Endgerät zu verstehen, insbesondere aber Personal Computer (PCs), mobile Computer (Laptops, Handhelds etc) und dergleichen. Das Erfassen und Versenden der E-Mail kann dabei unmittelbar über ein Formular auf einer Website erfolgen. Die elektronische Nachricht wird mit einer eindeutigen E-Mail-Adresse des Empfängers versehen und an diesen bzw. dessen Computer übermittelt. In der Regel geschieht die Übermittlung über mehrere zwischengeschaltete Computer, zwischen denen ein Datenaustausch erfolgt. Die E-mail wird schließlich in einer Mailbox auf einem Computer gespeichert und kann von dem Empfänger abgerufen werden. Der Abruf erfolgt meist in gewissen Zeitabständen durch eine temporäre Verbindung zu der Mailbox.

Der Empfänger kann von der an ihn gesandten E-Mail nur dann Notiz nehmen, wenn er sich an einem Endgerät befindet, das die E-Mail entgegen nehmen kann. Ist dieses Endgerät, beispielsweise der PC des Empfängers, ausgeschaltet oder nicht mit einem System zur Übermittlung der E-mail, beispielsweise dem Internet, verbunden, so kann der Empfänger die E-Mail nicht erhalten. Insbesondere wenn der Empfänger über einen Internet-Service-Provider (ISP) nur gelegentlich an ihn gerichtete E-Mails bei einem Server abholt, kann ein längerer Zeitraum bis zum Empfang der E-Mail vergehen.

Im Stand der Technik sind zur Lösung diese Problems Verfahren bekannt, bei denen der Empfänger bei Eingang einer E-Mail in seiner Mailbox generell über eine SMS eines Mobilfunksystems oder einen Pager benachrichtigt wird. Nachteilig an derartigen Verfahren ist, dass die Benachrichtigung unabhängig von der Dringlichkeit der E-Mail erfolgt und bei großem Aufkommen an E-Mails entsprechend viele SMS-Nachrichten versandt werden, was nicht zuletzt Kosten für den Empfänger verursacht.

Das Dokument EP 1 148 748 A1 beschreibt die Verwendung von Kurznachrichten der Art, wie sie von einem digitalen Radiokommunikationsnetzwerk zur Verfügung gestellt werden in Verbindung mit dem zur Verfügung stellen von gespeicherten digitalen Daten über das digitale Radiokommunikationsnetzwerk.

Das Dokument WO 02/13470 A2 beschreibt den Empfang einer E-Mail, die Weiterverarbeitung der Nachricht in einer Weise, wie sie vom Empfänger der Nachricht spezifiziert ist und das Weiterleiten der Nachricht zu einem Empfänger an einen entfernt gelegenen Computer, wenn die Weiterverarbeitung angibt, dass die Weiterleitung der Nachricht durchgeführt werden soll, durch ein E-Mail Relais.

Der vorliegenden Erfindung liegt daher das Problem zu Grunde, die Anzahl der Benachrichtigungen des Empfängers zu verringern.

Dieses Problem wird durch ein Verfahren nach Anspruch 1 gelöst.

Das erfindungsgemäße Verfahren sieht vor, dass beim Erstellen der Nachricht durch einen Absender zusätzlich zur elektronischen Nachrichten-Adresse des Empfängers eine Telefonnummer angegeben oder ausgewählt wird und nach Versenden der elektronischen Nachricht eine weitere Nachricht an die Telefonnummer gesandt wird. Bei der Telefonnummer handelt es sich vorzugsweise um eine dem Empfänger zugeordnete Mobilfunknummer. Die weitere Nachricht ist vorzugsweise eine SMS, alternativ kann dies auch eine Sprachnachricht oder eine Nachricht an einen Pager, ein Fax oder dergleichen sein. Die Telefonnummer kann dabei in einer ersten Alternative von dem Absender beispielsweise in ein Formularfeld einer E-Mail eingetragen werden. Wird die E-mail über eine Website erstellt und versendet, meist als Webmail bezeichnet, kann die Telefonnummer alternativ auch von dem Empfänger für den Absender unsichtbar in einer Datenbank hinterlegt sein, wobei der Absender beispielsweise durch Ankreuzen eines Auswahlfeldes die Telefonnummer auswählen und somit festlegen kann, ob eine zusätzliche Benachrichtigung an die ihm selbst in diesem Fall unbekannte Telefonnummer erfolgen soll. Auf diese Weise hat der Absender die Möglichkeit zu entscheiden, ob eine Benachrichtigung des Empfängers erfolgen soll.

In einer Weiterbildung des Verfahrens ist vorgesehen, dass mit der weiteren Nachricht zumindest ein Teil des Textes der elektronischen Nachricht telefonisch an den Empfänger übermittelt wird. Insbesondere wenn die weitere Nachricht als SMS versandt wird besteht die Möglichkeit, auf diese Weise erste Informationen bezüglich der E-Mail an den Empfänger zu übermitteln. Der telefonisch an den Empfänger übermittelte Teil der Nachricht ist vorzugsweise eine Betreffangabe in der E-Mail oder ein anderer automatisiert analysierbarer Teil des Textes.

In einer Weiterbildung des Verfahrens ist vorgesehen, dass der an den Empfänger telefonisch übermittelte Teil des Textes der elektronischen Nachricht um zusätzliche Informationen zum Empfänger- und/oder Diensteanbieter ergänzt wird. Die Informationen zum Empfänger können dessen Name, E-Mail-Adresse eine Telefonnummer oder dergleichen sein. Informationen zum Diensteanbieter können beispielsweise Werbetexte oder dergleichen sein.

Das erfindungsgemäße Verfahren umfasst folgende Verfahrensschritte: Eingabe der Telefonnummer durch den Absender; Extraktion der Telefonnummer aus dem Text; Erstellen einer weiteren Nachricht; Übermittlung der weiteren Nachricht an einen SMTP Server; Weiterleitung der weitere Nachricht an die ermittelte Telefonnummer über einen Mobilfunkprovider. In einer Weiterbildung dieses Verfahrens sind folgende Verfahrensschritte vorgesehen: Eingabe der Telefonnummer durch den Absender; Extraktion der Telefonnummer sowie der Betreffzeile aus dem Text; Zusammenfügung der Telefonnummer und der Betreffzeile zu einer weiteren Nachricht; Übermittlung der weiteren Nachricht an einen SMTP Server; Weiterleitung der weitere Nachricht an die ermittelte Telefonnummer über einen Mobilfunkprovider. Die Eingabe der Telefonnummer kann dabei wie oben ausgeführt manuell durch den Absender erfolgen oder es kann dem Absender eine Auswahl geboten werden, ob er eine Benachrichtigung an den Empfänger wünscht. Die Extraktion der Telefonnummer kann aus einem besonderen Feld der E-mail erfolgen oder aus einen Datenbankfeld einer Datenbank in der die E-Mail zunächst zwischengespeichert wird. Die Zusammenfügung der Telefonnummer und der Betreffzeile zu einer weiteren Nachricht ist so zu verstehen, dass mindestens aus diesen beiden Angaben die neue Nachricht gebildet wird. Die Nachricht wird über ein bekanntes Mail-SMS Gateway einem Mobilfunkprovider übermittelt und von diesem an den Empfänger zugestellt.

In einer Weiterbildung des Verfahrens ist vorgesehen, dass die Weiterleitung des Textstrings an den Mobilfunkprovider erst nach einer Ermittlung von Abrechnungsdaten erfolgt. Kosten für das Versenden der SMS können so dem Empfänger bzw. Absender der E-Mail berechnet werden.

Vorteilhafte Ausgestaltungen der Erfindung werden in einem Ausführungsbeispiel anhand der beiliegenden Zeichnung erläutert. Dabei zeigt:

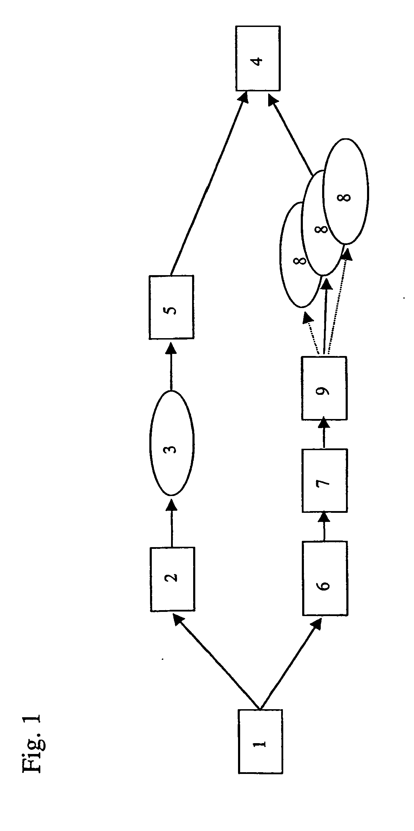

- Fig. 1: eine Skizze zum Ablauf des erfindungsgemäßen Verfahrens.

Der Verfasser einer elektronischen Nachricht, meist als E-mail bezeichnet, gibt diese beispielsweise auf einer Website in ein entsprechendes Formular ein. Die Angaben in dem Formular werden entweder unmittelbar in ein E-Mail Format umgewandelt und in dieser Form weiterbearbeitet oder zunächst in einer Datenbank erfasst und mittels einer Datenbankanwendung weiterverarbeitet. Alternativ kann die Eingabe auch in einem Programm zur Erfassung und Bearbeitung elektronischer Nachrichten, meist als Mail-Reader bezeichnet, beispielsweise auf einem Personal Computer (PC), einem Handheld, einem elektronischen Organizer oder einem Mobiltelefon mit der Möglichkeit elektronische Nachrichten zu versenden, erfolgen. Der Verfasser gibt dabei die E-Mail-Adresse des Empfängers, einen Betreff und einen an den Empfänger zu übermittelnden Text ein.

Erfindungsgemäß besteht nun die zusätzliche Möglichkeit, eine Telefonnummer, vorzugsweise eine Mobilfunknummer, anzugeben. Die Telefonnummer kann als zusätzliche Angabe in der E-Mail selbst, beispielsweise in der Kopfzeile, oder als nur für das Mailsystem der Website auswertbares Datum, beispielsweise in Form eines eigenständigen Datenbankeintrages, gestaltet sein. Sobald die E-Mail versendet wird, wird eine SMS-Benachrichtigung oder beispielsweise ein Anruf oder dergleichen an die angegebene Telefonnummer ausgelöst.

Eine E-Mail in üblichen SMTP Systemen besteht aus mehreren Teilen, und zwar dem Umschlag (SMTP-Envelope), den Kopfzeilen (Header) und dem eigentlichen Text oder Inhalt (Body). Der Header einer E-Mail bildet sozusagen den Briefkopf, dem man beispielsweise Absender, Empfänger, Datum und Betreff entnehmen kann. Die Kopfzeilen werden nunmehr ergänzt durch eine weitere Kopfzeile, in der die zu benachrichtigende Telefonnummer angegeben werden kann. Da die Anzahl der Kopfzeilen beliebig ist und nur durch ein eindeutiges Schlüsselwort identifizierbar sein müssen, kann eine derart ergänzte E-Mail weiterhin von jedem üblichen Mailprogramm verarbeitet bzw. weitergeleitet werden. Üblicherweise beginnen die nicht standardisierten Kopfzeilen mit "X-", derart ergänzte Kopfzeilen könnten daher beispielsweise folgendes Format aufweisen:
Sender: Absender <absender@dts-law.com>
From: Absender <absender@dts-law.com>
Subject: Betreff
To: Empfänger <empfaenger@dts-law.com>,
X-Benachrichtigung: +49-123-456789

Im vorliegenden Beispiel enthält die Kopfzeile als zusätzliche Angabe "X-Benachrichtigung" mit der zu benachrichtigenden Telefonnummer. Diese Zeile wird von dem Mailprogramm ausgewertet und es wird eine weitere Nachricht 9 an die angegeben Telefonnummer verschickt.

Alternativ kann die E-Mail 1 zunächst in einer Datenbank gespeichert sein. In diesem Fall werden die einzelnen Angaben beispielsweise in einer relationalen Datenbank in einer Tabelle mit mehreren Feldern gespeichert. Die zu benachrichtigende Telefonnummer wird nicht in die E-Mail aufgenommen, sie stellt also lediglich eine Angabe zur weiteren bearbeitung der E-Mail 1 dar. Die zu benachrichtigende Telefonnummer kann alternativ vom Empfänger als allgemeine Einstellung seines Mail-accounts festgelegt und durch den Absender nicht veränderbar sein. Dem Absender wird beim Erstellen der E-Mail lediglich beispielsweise ein Auswahlknopf präsentiert, mit dem er festlegen kann, ob eine zusätzliche Benachrichtigung des Empfängers 4 ausgelöst werden soll.

Wie in Fig. 1 dargestellt liegt nach Eingabe der oben genannten Daten (Empfängeradresse, Betreff, Text, Mobilfunknummer) die E-Mail als Datei 1 bzw. Datenbankeintrag auf einem Computersystem vor. Ein erster Prozess versendet die E-Mail mittels eines Mailprogramms über einen üblichen Mailserver 2. Die E-mail wird direkt oder über Zwischenstationen 3 an eine dem Empfänger 4 zugeordnete Mailbox 5 übertragen. Üblicherweise ist diese Mailbox 5 nicht unmittelbar im Zugriff des Empfängers 4, sondern beispielsweise einem Mailserver eines Internetproviders zugeordnet. Der PC oder ein sonstiges Endgerät wie ein Handheld oder dergleichen des Empfängers 4 wird von Zeit zu Zeit mit dem Mailserver verbunden und dort bereitliegende E-Mails werden auf das Endgerät übertragen.

Parallel zu dem ersten Prozess wird bei Versenden der E-mail durch den Sender ein zweiter Prozess ausgelöst. Dieser Extrahiert aus der E-Mail die Betreffzeile sowie die angegebene Telefonnummer. Der zweite Prozess kombiniert den Text der Betreffzeile, im oben genannten Beispiel also die Zeile Subject: mit dem Eintrag "Betreff" der E-mail mit einem vordefinierten Text der Art "Sie haben soeben eine E-Mail von [E-Mailadresse des Absenders] mit dem Betreff [Betreff der E-Mail] erhalten". Dieser so entstandene Benachrichtigungstext 6 wird nun als weitere Nachricht 9 mittels Short Message Service (SMS) an die zuvor in der E-Mail durch den Absender angegebene Telefonnummer übermittelt. Die weitere Nachricht 9 wird dazu über ein SMS-SMTP-Gateway 7 als SMS an den zu der angegebenen Telefonnummer gehörenden Netzbetreiber 8 übermittelt und von diesem schließlich an die angegebene Telefonnummer ausgeliefert. Die gestrichelten Pfeile in Fig. 1 verdeutlichen, dass hier anhand der ermittelten Telefonnummer einer von mehreren Providern auszuwählen ist.

Vor Übergabe der SMS an den Netzbetreiber werden eventuelle Abrechnungsdaten ermittelt, um diese dem Absender der E-Mail zuordnen und in Rechnung stellen zu können.

Statt mittels einer SMS kann die Benachrichtigung des Empfängers 4 mit jedem beliebigen anderen Mittel erfolgen, beispielsweise können über ein automatisiertes Sprachsystem Teile der E-Mail wie z.B. die Betreffzeile mittels eines Telefonanrufs an die angegebene Telefonnummer übermittelt werden, es kann eine entsprechende Faxnachricht versandt werden oder es können je nach den technischen Möglichkeiten des Telefonnetzes spezielle Benachrichtigungsmechanismen ausgelöst werden oder es kann schlicht ein Telefonanruf ausgelöst werden, der beispielsweise nach einem Klingelzeichen wieder abgebrochen wird.

Die Benachrichtigung des Empfängers 4 an die in der E-Mail angegebene Telefonnummer kann von jedem an der Übertragung der E-Mail beteiligten Computer initiiert werden, also beispielsweise einem Mailserver auf der Absender- oder Empfängerseite. Im vorliegenden Ausführungsbeispiel wird die Benachrichtigung unmittelbar von einem Webserver initiiert, der über ein Mailformular die Eingabe und das Versenden einer E-Mail erlaubt. Derartige Dienste werden gemeinhin als Webmail bezeichnet, da das Erfassen und Lesen einer E-Mail mittels eines Browsers unmittelbar an einem Webserver erfolgt. Alternativ kann das erfindungsgemäße Verfahren auch mit üblichen Mailsystemen, bei denen ein Mail-Editor zum Erstellen der E-Mail verwendet wird und diese üblicherweise mittels eines Mail-Exchange-Programms an ein empfängerseitiges Mail-Exchange-Programms übermittelt wird und dort vom Empfänger mittels eines Mail-Readers gelesen werden kann, verwendet werden.

### BEZUGSZEICHENLISTE

- 1: E-Mail
- 2: Mailserver
- 3: Zwischenstationen
- 4: Empfänger
- 5: Mailbox
- 6: Benachrichtigungstext
- 7: SMS-SMTP-Gateway
- 8: Netzbetreiber
- 9: Weitere Nachricht

## Patentansprüche

1. Verfahren zur Benachrichtigung eines Empfängers (4) über eine an diesen von einem Absender gesandte elektronische Nachricht (1), wobei der Empfänger (4) mittels einer weiteren Nachricht (9) über die an diesen gesandte Nachricht (1) benachrichtigt wird,
**dadurch gekennzeichnet, dass**
beim Erstellen der Nachricht (1) durch den Absender zusätzlich zur elektronischen Nachrichten-Adresse des Empfängers eine Telefonnummer durch den Absender manuell angegeben oder aus einer dem Absender gebotenen Auswahl ausgewählt wird und nach Versenden der elektronischen Nachricht (1) die weitere Nachricht (9) parallel an die Telefonnummer gesandt wird.

2. Verfahren nach Anspruch 1,
**dadurch gekennzeichnet, dass**
die elektronische Nachricht als eine E-Mail (1) gesendet wird, die eine ergänzte Kopfzeile umfasst, in der die Telefonnummer angegeben wird, dass die ergänzte Kopfzeile von einem Mailprogramm ausgewertet wird, und dass die weitere Nachricht (9) an die Telefonnummer verschickt wird.

3. Verfahren nach Anspruch 1 oder 2,
**dadurch gekennzeichnet, dass**
aus der elektronischen Nachricht (1) die weitere Nachricht (9) gebildet wird, wobei die weitere Nachricht (9) eine Information zur Identität des Absenders, insbesondere die E-Mail-Adresse des Absenders, enthält.

4. Verfahren nach Anspruch 1,
**dadurch gekennzeichnet, dass**
die weitere Nachricht (9) eine SMS umfasst.

5. Verfahren nach Anspruch 1,
**dadurch gekennzeichnet, dass**
die weitere Nachricht (9) eine Sprachnachricht umfasst.

6. Verfahren nach Anspruch 1,
**dadurch gekennzeichnet, dass**
die weitere Nachricht (9) eine Nachricht an einen Pager umfasst.

7. Verfahren nach einem der vorhergehenden Ansprüche,
**dadurch gekennzeichnet, dass**
mit der weiteren Nachricht (9) zumindest ein Teil des Textes der elektronischen Nachricht (1) telefonisch an den Empfänger (4) übermittelt wird.

8. Verfahren nach Anspruch 7,
**dadurch gekennzeichnet, dass**
der an den Empfänger (4) telefonisch übermittelte Teil des Textes der elektronischen Nachricht (1) um zusätzliche Informationen zum Empfänger- und/oder Diensteanbieter ergänzt wird.

9. Verfahren nach einem der vorhergehenden Ansprüche, umfassend die Verfahrensschritte
• Eingabe der Telefonnummer durch den Absender
• Extraktion der Telefonnummer aus dem Text
• Erstellen einer weiteren Nachricht
• Übermittlung der weiteren Nachricht an einen SMTP Server
• Weiterleitung der weiteren Nachricht an die ermittelte Telefonnummer über einen Mobilfunkprovider.

10. Verfahren nach dem vorhergehenden Anspruch, umfassend die Verfahrensschritte
• Eingabe der Telefonnummer durch den Absender
• Extraktion der Telefonnummer sowie der Betreffzeile aus dem Text
• Zusammenfügung der Telefonnummer und der Betreffzeile zu einer weiteren Nachricht
• Übermittlung der weiteren Nachricht an einen SMTP Server
• Weiterleitung der weiteren Nachricht an die ermittelte Telefonnummer über einen Mobilfunkprovider.

11. Verfahren nach dem vorhergehenden Anspruch,
**dadurch gekennzeichnet, dass**
die Weiterleitung des Textstrings an den Mobilfunkprovider erst nach einer Ermittlung von Abrechnungsdaten erfolgt.

## Claims

1. Method of notifying a receiver (4) of an electronic message (1) sent to the latter from a sender, wherein the receiver (4) is notified by means of a further message (9) of the message (1) sent to him,
**characterized in that**
when the message (1) is generated by the sender, in addition to the electronic message address of the receiver a telephone number is also given manually by the sender or is selected from a selection provided to the sender and after the electronic message (1) has been sent the further message (9) is sent in parallel to the telephone number.

2. Method according to claim 1,
**characterized in that**
the electronic message is sent as an e-mail (1) which contains a supplemented header line in which the telephone number is given, **in that** the supplemented header line is evaluated by a mail programme, and **in that** the further message (9) is sent to the telephone number.

3. Method according to claim 1 or 2,
**characterized in that**
the further message (9) is formed from the electronic message (1), wherein the further message (9) contains information concerning the identity of the sender, in particular the e-mail address of the sender.

4. Method according to claim 1,
**characterized in that**
the further message (9) comprises an SMS.

5. Method according to claim 1,
**characterized in that**
the further message (9) comprises a voice message.

6. Method according to claim 1,
**characterized in that**
the further message (9) comprises a message to a pager.

7. Method according to one of the previous claims,
**characterized in that**
at least part of the text of the electronic message (1) is transmitted telephonically to the receiver (4) with the further message (9).

8. Method according to claim 7,
**characterized in that**
the part of the text of the electronic message (1) that is transmitted telephonically to the receiver (4) is supplemented by additional information concerning the receiver and/or service provider.

9. Method according to one of the previous claims,
comprising the method steps
• inputting of the telephone number by the sender
• extraction of the telephone number from the text
• generation of a further message
• transmission of the further message to an SMTP server
• relaying of the further message to the ascertained telephone number via a mobile telephony provider.

10. Method according to the previous claim, comprising the method steps
• inputting of the telephone number by the sender
• extraction of the telephone number and of the subject line from the text
• combining of the telephone number and the subject line to form a further message
• transmission of the further message to an SMTP server
• relaying of the further message to the ascertained telephone number via a mobile telephony provider.

11. Method according to the previous claim,
**characterized in that**
the relaying of the text string to the mobile telephony provider takes place only after accounting data have been ascertained.

## Revendications

1. Procédé pour informer un destinataire (4) de l'envoi d'un message électronique (1) lui étant adressé par un expéditeur, ledit destinataire (4) étant informé du message (1) lui étant adressé au moyen d'un nouveau message (9), **caractérisé en ce que** lors de la génération du message (1) par l'expéditeur, un numéro de téléphone est indiqué manuellement par l'expéditeur en plus de l'adresse de messagerie électronique du destinataire, ou est choisi parmi une sélection proposée à l'expéditeur, et après l'envoi du message électronique (1), le nouveau message (9) est envoyé en parallèle au numéro de téléphone.

2. Procédé selon la revendication 1, **caractérisé en ce que** le message électronique est envoyé sous la forme d'un email (1) qui comporte une ligne d'en-tête complémentaire dans laquelle est indiqué le numéro de téléphone, **en ce que** la ligne d'en-tête complémentaire est exploitée par un programme de messagerie électronique et **en ce que** le nouveau message (9) est envoyé au numéro de téléphone.

3. Procédé selon la revendication 1 ou 2, **caractérisé en ce que** le nouveau message (9) est formé à partir du message électronique (1), le nouveau message (9) contenant une information relative à l'identité de l'expéditeur, en particulier l'adresse électronique de l'expéditeur.

4. Procédé selon la revendication 1, **caractérisé en ce que** le nouveau message (9) comprend un SMS.

5. Procédé selon la revendication 1, **caractérisé en ce que** le nouveau message (9) comprend un message vocal.

6. Procédé selon la revendication 1, **caractérisé en ce que** le nouveau message (9) comprend un message sur un téléavertisseur.

7. Procédé selon l'une quelconque des revendications précédentes, **caractérisé en ce qu'**au moins une partie du texte du message électronique (1) est transmise par téléphone au destinataire (4) avec le nouveau message (9).

8. Procédé selon la revendication 7, **caractérisé en ce que** la partie du texte du message électronique (1) transmise par téléphone au destinataire (4) est complétée par des informations supplémentaires relatives au fournisseur du destinataire et/ou au fournisseur de services.

9. Procédé selon l'une quelconque des revendications précédentes, comprenant les étapes de procédé suivantes :
- saisie du numéro de téléphone par l'expéditeur ;
- extraction du numéro de téléphone hors du texte ;
- génération d'un nouveau message ;
- transmission du nouveau message à un serveur SMTP ;
- réacheminement du nouveau message au numéro de téléphone déterminé par l'intermédiaire d'un fournisseur de téléphonie mobile.

10. Procédé selon la revendication précédente, comprenant les étapes de procédé suivantes:
- saisie du numéro de téléphone par l'expéditeur;
- extraction du numéro de téléphone ainsi que de la ligne d'objet hors du texte;
- réunion du numéro de téléphone et de la ligne d'objet pour former un nouveau message ;
- transmission du nouveau message à un serveur SMTP ;
- réacheminement du nouveau message au numéro de téléphone transmis par l'intermédiaire d'un fournisseur de téléphonie mobile.

11. Procédé selon la revendication précédente, **caractérisé en ce que** le réacheminement de la chaîne de caractères au fournisseur de téléphonie mobile est effectué uniquement après une détermination des données de facturation.
